Europäisches Patentamt

European Patent Office

Office européen des brevets

(19)

(11) EP 0 729 026 A1

(12) **EUROPEAN PATENT APPLICATION**

(43) Date of publication:
28.08.1996 Bulletin 1996/35

(51) Int. Cl.⁶: **G01N 23/08**

(21) Application number: 96102000.5

(22) Date of filing: 12.02.1996

(84) Designated Contracting States:
AT CH ES FR LI SE

(30) Priority: 22.02.1995 IT MI950328

(71) Applicants:
• ENEL S.p.A.
I-00198 Roma (IT)
• CISE S.p.A.
I-20090 Segrate (IT)

(72) Inventors:
• De Pasquale, Nicolò
I-20090 Segrate (MI) (IT)

• Rossi, Giancarlo
I-30033 Noale (VE) (IT)

(74) Representative: **Ferraiolo, Rossana et al**
**Ferraiolo S.r.l.,**
**Via Napo Torriani, 10**
**20124 Milano (IT)**

<u>Remarks:</u>
A request for correction of the description has been filed pursuant to Rule 88 EPC. A decision on the request will be taken during the proceedings before the Examining Division (Guidelines for Examination in the EPO, A-V, 3.).

(54) **Apparatus to detect the density profile of a layer of snow**

(57)     A first station in a snow filled basin comprises a radiation source (2), at least three detectors (3) for said radiations, and a via-ether transmission means (8) that trasmits the data gathered by said detectors to a second remote station wherein a processor (9) handles said data by applying the algorythms of the static asymmetrical tomography.

FIG.3

EP 0 729 026 A1

## Description

The present invention concerns an apparatus to detect the density profile of a layer of snow, especially the vertical density profile of a layer of snow.

In order to evaluate the mountain water resources it is necessary to measure the equivalent in water of layers of snow in a snow-filled basin and to this purpose the following three solutions have mainly been followed:

- manual-gravimetric measurement by means of caroting and weighing on location; suitable points in the snow-filled basin are identified for caroting on the basis of their significance of each point compared to the entire basin and for what concerns the possibility of access to these points by operators;
- the use of detectors mounted on aircraft in order to measure the g rays from natural radionuclids;
- a radioactive source and a detector fitted within two parallel poles, set in the ground at a distance that allows the accumulation, between them, of such a quantity of snow as to represent a significant sample of the snow; the source and the detector are controlled by step-by-step motors synchronized so as to strictly preserve their alignment; The measurement consists of the detection of radiations emitted by the source and dampened by the snow accumulated between the two poles, while the source and the detector move in alignment, along the vertical; the apparatus associated to the two poles comprises a processor of the signals received from the detector and a radio-transmitter to transmit the data to a remote station.

The greatest draw-backs featured by the three solutions described above are, respectively:

- in order to reach the various points to be examined there are difficulties and physical risks, that are sometimes impossible to face, owing to the hazardous locations and severe weather conditions.
- the cost for each measurement is high owing to the need to employ a helicopter and a number of people; moreover, it may be that the point to be flown over is in an inaccessible position for a helicopter,
- the installation and handling of radioactive materials could put the safety of operators in jeopardy and create conflicts with rules and laws; moreover, moving parts at temperatures constantly below 0°C, radio bridges in a number sufficient to connect the remote station to the field station and the high level of energy consumption of the apparatuses set problems that are difficult to solve and costly.

The present invention sets forth to obviate the above draw-backs.

According to the present invention the apparatus to detect the density profile of a layer of snow in a snow-filled basin, comprises:

- in a first station located in a significant position in the basin:

    a) a group of $n$ detectors of radiations emitted by a radioactive source distributed along a pole planted in said significant position, the detectors being associated to a common signal analyzing device, called multi-channel analyzer, and to a common memory and to a first common MODEM,
    b) a radioactive source set at the level of the base of said pole, and at a horizontal distance from said pole such that all the detectors may see the radioactive source,
    c) a telephone appliance connected to said MODEM in order to transmit the data detected by said $n$ detectors relative to said radiations as dampened by the snow juxtaposed between said radioactive source and each detector, in real time to a remote station according to a time schedule pre-set in said memory,

- in said remote station:

    d) a second MODEM and a computer that performs the conversion that performs the conversion of the measurements of the radioactivity received through said telephone facility into values of snow density along the vertical by using the algorithms of static asymmetric tomography.

As is known tomography allows to rebuild images starting from a finite number of projections; in the invention, the images are a map of the density of the layers of snow and the projections are the emission of ionizing radiations dampened by the thickness of the snow.

The said radioactive source can be a natural radioactive source, such as thorium and said detectors can be detectors of cesium iodide; said telephone facility is preferably a cell-phone.

The apparatuses consistent with the present invention shall be associated to conventional apparatus for the measurement of the height of layer of snow, foe example an ultra-sonic means, the processor can combine information concerning the density of the layer of snow with the measurement of its height in order to supply the equivalent amount of water in the layer of snow examined.

The advantages of the invention lie mainly in the fact that it avoids those problems arising from the use of artificial radioactive substances and mobile apparatuses; in requiring limited energy sources in order to activate cell-phone appliances; in needing, at the remote station, the use of a "personal computer" with "software" dedicated to performing the conversion of the measurements of radioactivity into values of density by means of static asymmetrical tomography techniques, hence with a considerable reduction in costs compared to conventional techniques that require the use of costly mini-computers for data processing purposes; the installation of the apparatuses can be made during the good season avoiding people the dangers of operating in mountainous areas that are heavily covered in snow that are required in the use of other known methods and equipment.

In order to explain in what way the algorithms of the static asymmetrical tomography are used, we provide:

1 - firstly a theoretical note concerning algorithms of the function for the transmission of radiations through a homogeneous medium;

2 - hence an analysis of said algorithms in the case of the present invention;

3 - and, furthermore, an experiment conducted simulating a constant density snow stratigraphy in order to confirm the suitability of said application for this purpose of the present invention with reference to the attached drawing "D";

4 - finally, we supply an example of realization of the invention with reference to the three attached figures.

## 1 - ALGORITHMS

The function for the transmission of mono-energetic gamma rays through a homogeneous medium is given by:

$$I = I_0 \cdot e^{-\mu x} \tag{1}$$

where

$I$ represents the number of $\gamma$ quanta detected in the presence of an absorbing medium;

$I_0$ represents the number of $\gamma$ quanta detected in the absence of an absorbing medium;

$\mu$ is the linear absorption coefficient of the absorbing medium ($cm^{-1}$).

In the case that the medium crossed is not homogeneous, and assuming that the density of the medium depends only on its height, the function for the transmission of $\gamma$ radiations through the matter is given by:

$$I = I_0 \cdot e^{-\int_0^L \mu(1)dl} \tag{2}$$

where $I = I_0 \cdot e$

$\mu(1)$ is a function that describes the trend of the absorption coefficient of the medium along the path of the $\gamma$ quanta. L-O is the rectilinear path of the $\gamma$ quantum from the source to the detector.

(2) by performing the logarithm of both terms of the equation (2) and supposing (see chart D) that:

$$L = Z/\sin \alpha \tag{3}$$

we shall have:

$$I_n \cdot (I/I_0) = 1 \big/ \sin \alpha \int_O^Z \mu(z)\, dz \tag{4}$$

where

$\alpha$ represents the angle between the horizontal plane and the line joining the detector and source;

$z$ represents the height of the detector from the horizontal plane.

Supposing that:

$$\mu(z) = \rho(z) . \mu_H \tag{5}$$

where
$\mu(z)$ is the linear absorption coefficient of the absorbing medium ($cm^{-1}$);
$\rho(z)$ is the density of the absorbing medium ($gr/cm^{-3}$);
$\mu_H$ is the maximum absorption coefficient for water for the energy considered and is normally tabulated in literature ($cm^2 g^{-1}$);
we obtain:

$$\frac{\sin \alpha \cdot l_n(I/I_0)}{\mu_H} = \int_O^Z \rho(z)\,dz \qquad (6)$$

## 2 - ANALYSIS OF THE ALGORITHMS AS USED IN THE INVENTION

In this case we are in the presence of eight equations similar to the ratio (6); more especially, we are in the presence of an equation for each detector.

$$\frac{\sin \alpha_i \cdot l_n/(I_i/I_{0i})}{\mu_H} = \int_O^{Zi} \rho(z)\,dz \qquad (i = 1 \ldots 8) \qquad (7)$$

and given that

$$\mathrm{Integ}_i = \frac{\sin \alpha_i \cdot l_n/(I_i/I_{0i})}{\mu_H} \qquad (i = 1 \ldots 8) \qquad (8)$$

the system of equations (7) becomes

$$\mathrm{Integ}_i = - \int_O^{Zi} \rho(z)\,dz \qquad (i = 1 \ldots 8) \qquad (9)$$

The ratio (9) applied to each one of the eight detectors constitute a system of eight integral equations in which the unknown item is the density $\rho(z)$.

In order to solve the system of equations deriving from (9) one must set forth hypotheses on the form of the unknown function $\rho(z)$.

The first member of the equation (9) is completely determined and is known as the line integral. The problem therefore leads back to making explicit the $\rho(z)$ in such a form that may be solved under the integral sign.

The $\rho(z)$ function must satisfy a number of conditions:

- the function must describe the variation of the density of the medium along the axis as faithfully as possible. In the case in question with a layer of snow Z metres thick, it is plausible to hypothesize that the density decreases with the increase in height;
- the function must be null outside the medium and greater than zero within the medium;
- the function must be integrable;
- the number of coefficients making up the function must be kept to a minimum in order to obtain optimum time features in solving the system of equations.

The function $\rho(z)$ may be a polynomium, an exponential, a function of power, etc. The method allows to vary $\rho(z)$ as a function of the type of stratigraphy, in all cases.

## 3 - EXPERIMENT IN SIMULATED CONDITIONS

In order to simulate a snow layer with constant density a cylindrical container full of water was used to serve as an absorbent for part of the radiations (see drawing D). At the base of the container a radioactive source of $^{60}Co$ for

222KBq was set, and on the opposite side of the container a vertical support along which the eight detectors $Z_1$, ...., $Z_8$ were set; each connecting line L between said source and a detector forms an angle $\alpha$ with the horizontal.

Two measurements were conducted: with and without the absorbent, in order to determine I and $I_0$ respectively and to calculate the line integrals corresponding to the first term of the equation (9).

The results of these measurements are shown in the following table:

TABLE

| Detect. | Net areas with $H_2O$ (I) | Net areas with $H_2O$ ($I_0$) | sin $\alpha$ | Line integrals | Height |
|---|---|---|---|---|---|
| | *[c.p.m.] | *[c.p.m.] | | [gr/cm$^2$] | [cm] |
| 1 | 0.066 | 1.540 | 0.9454 | 47.93 | 45.0 |
| 2 | 0.076 | 1.883 | 0.9333 | 48.42 | 40.3 |
| 3 | 0.275 | 3.233 | 0.9104 | 36.16 | 34.1 |
| 4 | 0.559 | 3.816 | 0.8874 | 27.49 | 29.8 |
| 5 | 1.033 | 5.985 | 0.8277 | 23.45 | 22.9 |
| 6 | 1.793 | 8.040 | 0.7399 | 17.90 | 17.1 |
| 7 | 3.335 | 12.265 | 0.5870 | 12.32 | 11.2 |
| 8 | 4.402 | 13.783 | 0.1961 | 3.61 | 3.1 |
| *[c.p.m.] counts per minutes | | | | | |

Having considered a cylinder full of water as an absorbing medium is the equivalent of defining the function $\rho$ (z) as constant, and especially:

$$(z) = A_0 \qquad (10)$$

If we replace (10) in ratio (9) at the second member we shall have:

$$-\int_O^z A_0 dz = -A_0 z \qquad (11)$$

and equation (9) becomes:

$$Integ_n = A_0 Z_n \qquad (n=1...8) \qquad (12)$$

where: $Integ_n$ represents the n line integrals and z the distances of the detectors from the plane of abscissa axis. In the diagram below the trend obtained for the densities as a function of height is shown. The expected result, a straight line parallel to the abscissa axis was fully confirmed. The value obtained for $A_0$ (1.07 g/cm$^3$) experimentally confirms the value of water density at standard pressure and temperature with a 7% error compared to the theoretical value.

## 4 - EXAMPLE OF THE INVENTION AS REALIZED

The invention will be described in further detail through an example of realization and with reference to the attached drawings in which the:

FIG. 1 is a partial outline drawing of the apparatus,
FIG. 2 is a block diagram of the entire apparatus, and
FIG. 3 is a block diagram of the field station and the remote station.

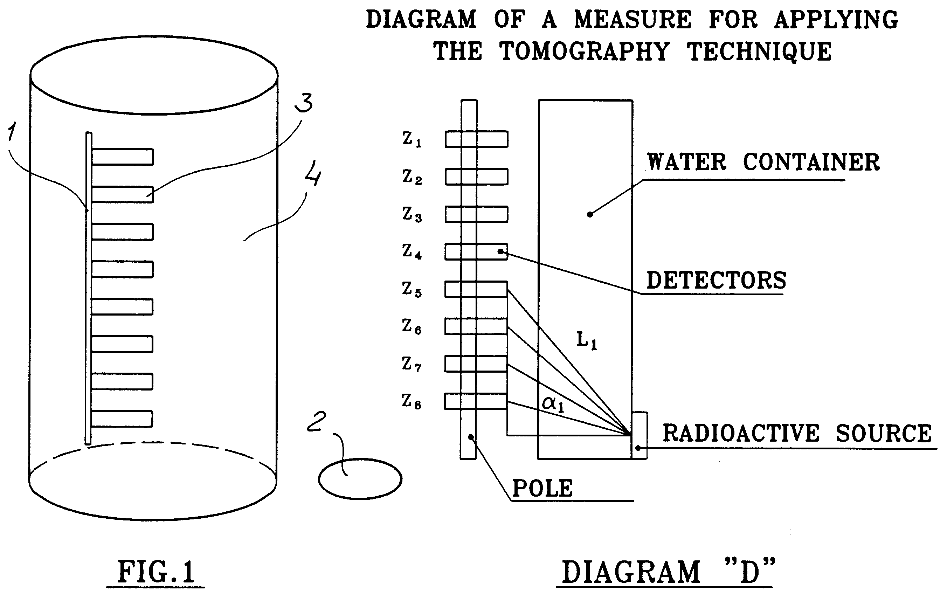

Fig. 1 shows: a pole 1 set in a significant position in a snow filled basin; a natural radioactive source 2 made up of thorium salt is set at ground level and at a convenient distance from the pole in order that each of the eight detectors 3 "see" said radioactive source; the assembly 4 comprising instruments for $\gamma$ spectrometry including detectors 3 with cesium iodide distanced from one another along pole 1, while all the instruments are better specified below with reference to

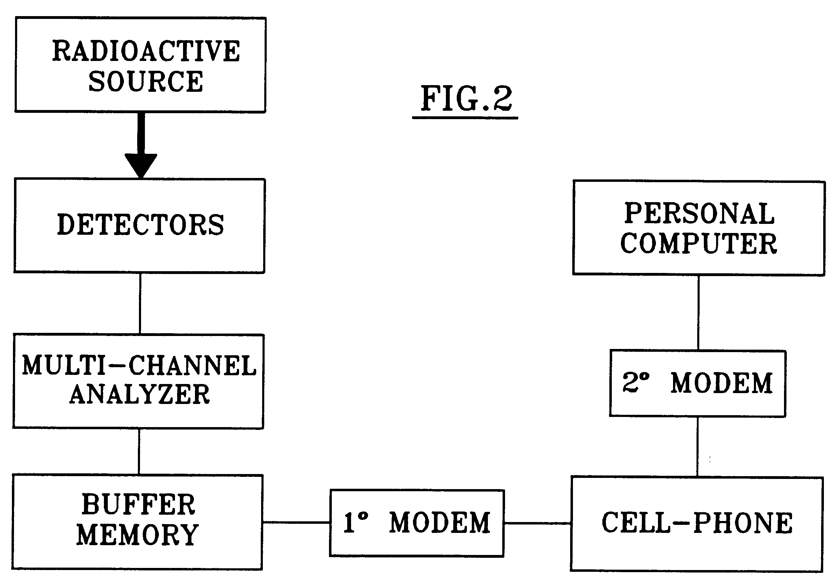

Fig. 2 that shows the radioactive source 2, the set of eight detectors 3, a multi-channel analyzer 5, a buffer memory 6, a first MODEM 7, a cell-phone 8 that connects to a personal computer 9 through a second MODEM 10. The eight detectors 3 are of the $C_s I(T1)$ type with polarized photo-diode at a tension of + 24Volts and each absorbs 5mA; the detector's exit impulse is preamplified, positive, and with a decay time typical of a charge preamplifier, included between 40 and 100msec and an amplitude of 40mV at 660keV.

Each of the 8 detectors is fitted with a BNC connector, for the exit signal, and with a 9 pin plug connector, for the +24 volt polarization and for powering the pre-amplifier at +/- 12 volts. The detectors are connected, in groups of four, to 2 quadruple amplifier units. Within these each amplifier has its own potentiometer for amplitude gain adjustment.

The signals exiting the amplifiers, appropriately treated, are transmitted through to 15 pole tape cables, to the inlet to a converter-stabilizer mod. 275 by TAKES. This unit has 8 separate analogical inlets, with 5 volt dynamics, adjustable low threshold and control of the signal climb time from 3 to 10 msec common to all inlets. Each input is addressed to its own sub-group in the memory. The converter used is of the weight type. The conversion of the signal from analogical to digital is always made on 12 bits for a conversion time of about 5 msec.

The stabilization of the spectrum is performed by referring to the certain presence of a spectrum photo-peak (in our case the 2615 keV for 208 T1). Three digital thresholds are defined, each with 8 micro-switches, that compare against the 8 most significant bits in the conversion. The three thresholds respectively constitute an upper threshold, a medium threshold and a lower threshold. Determining the width of the gap is performed with the signal already converted to digital in order to ensure better stability.

The multi-channel analyzer, mod. 269 TAKES, is a NIM box with two units and a back-up battery so as to not lose the data in the channels in case of power failure. It is connected to the converter-stabilizer unit mod. 275 by means of a 37 pin socket. The memory is divided into two blocks (A and B) 4 Kb each managed independently by two separate inlet connectors.

The memories are broken into groups with 512 channels. Each of the two 4 Kb blocks is fitted with an 8 position commuter that determines the part of memory to be used for accumulation.

6

It is possible to externally monitor the spectrum by using a two channel oscilloscope. On one channel the spectrum trigger synchronism signal is addressed, while on the other the analogical signal proportional to the contents of the memory is supplied, with a 5 volt dynamics. The exit of the data from unit mod. 269 is foreseen through a RS-232 serial port with a transfer rate to be selected between 9,6 and 0,6 Kbaud. The transmission protocol foresees 7 code bits, even parity, 2 stop bits. The layout consists of lines of 8 digits separated by one space. Each line contains a CARRIAGE RETURN (that can be disactivated by means of a switch located on the front panel of the analyzer) and a LINE FEED in order to permit the use of serial printers. The analyzer may be controlled manually or in remote by means of the serial port.

The converter-stabilizer and the analyzer are powered through an DC/DC converter.

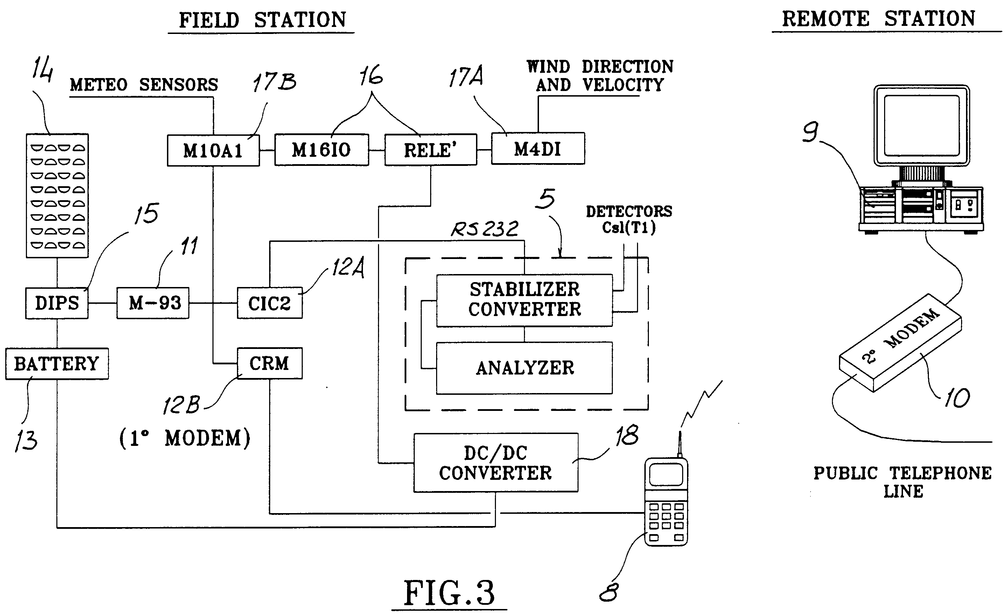

Fig. 3 comprises a left part relative to the field station and a right part relative to the remote station. Overall, the figure shows the instruments used for the nivo-meteorological station essentially made up of a system for the acquisition and processing of meteorological parameters (MICROS), and by a system able to acquire spectrums comprising 8 cesium iodide detectors 3 [CsI(T1)]; (QUARTZ & SILICE), a unit 5 comprising a multi-channel analyzer mod. 269 and by an eight-part converter with spectrum stabilizer mod. 275 [TAKES, powered by a DC/DC 18 converter (switching)].

The meteorological and radiometric instruments are managed by a processing unit 11 (M-93) that, with the support of appropriate interface modules, 12A, 12B (CIC, CRM), are able to transfer, by means of a cell telephone facility, the information acquired from the field station to a remote station.

The instruments consist of a rack, powered by a lead base battery (13), YUASA, of the sealed type (12 Vcc, 65 Ah), size 350 (l) x 166 (w) x 174 (h), described further on herein.

The battery 13 is recharged by means of a 40 watt solar panel 14 (40 volts, 1 Amp) connected to a DC/DC converter 15 (module DIPS) that can bring the yield of the same panel to an optimum also in the case of scarce sun radiance. Battery 15 is protected by a tension sensor (not shown) that provides for its dis-activation when the minimum discharge tension is reached (about 10.8 volts).

All the modules and cards are connected to a BUS by connectors complying with DIN 41612 standard where both the required tension and the interface signal lines are present.

The module 15 (DIPS), in addition to performing the DC/DC conversion, is provided with 220 volt 50 Hz and 24 Volt 50 Hz inlets. The rack is made up of the module 15 (DIPS) and by module 11 for the data processing (M-93), by the calculator interface box 12A (CIC), by a radio-modem box 12B (CRM) and by the unit 16 including module M1610 and a relay used to power and interface the meteorological sensors 17A, and 17B (M10A1, M4DI) to the processing and memory units.

The module 11 (M-93) is the nucleus of the meteorological instruments fitted in the rack. In fact its duty is to acquire, process and memorize, the data arriving from the peripheral units, according to the options set. Moreover, it is able to communicate, by means of the radio-modem box 12B (CRM), that we can conventionally define as a first modem, with peripheral acquisition units.

The module 11 (M-93) is programmed by means of a computer. The operation is very simple because it is based on an interactive operative system with menu resident on the same module 11.

In particular, it is possible to input, modify, memorize and visualize search and/or process programmes by means of a RS-232 serial port, comprising a 25 pin connector and 5 indicator LEDs for the line conditions RTS, DTR, DCD, CTS and DSR.

The I/O (input/output) flow of data on the serial port is controlled by the DSR line status.

When the DSR line is OFF (LED not lit), the serial port doesn't send outgoing characters and doesn't recognize incoming characters.

The module 11 (M-93) is equipped with BASIC language enhanced by dedicated instructions for the management of the acquisition and I/O communications programs, that allow to set up programs that can interact in real time with the data gathered, modify the method for the acquisition and processing of data according to the user's needs.

Modules 12A, 12B, are provided with static RAM, such as mas memory buffers, with lithium back-up batteries and hardware and software protection against accidental writing. On the front part of the 12A module there is a serial port that can serve various peripheral units.

The module 12B is used as a card for the transmission of modem data through the cell phone 8 and has a maximum transmission speed equal to 1200 baud.

Directly interfaced to module 11 are modules 17B, 17A, and those of group 16;

-   M10A1: this module is connected to the meteorological sensors except the one related to wind velocity measurement. The module comprises 10 inlets for analogical signals with autoranging 8-64-512-4096 mV f.s. or autoranging input of temperature and thermoresistance type PT100 (range -100°C / +500°C) with automatic selection of the tension/temperature measurement for each input. The module contemporarily provides: instantaneous measurements, minimums, maximums, integrals, sum of the squares, number of measurements made and averages in order to perform statistical processing.

- M4DI(M8DI): this is a 4 digital inlet module. Each channel performs measurements of frequencies, counts and periodic measurements. The wind velocity sensor is connected to this module. As with module M10A1, it is possible to perform statistical processing. In table 1 the correspondence between the inlets to module M10A1 and M4DI and the meteorological sensors.
- M16IO: this is an I/O connection module fitted with 16 opto-isolated channels. Each of the 16 I/O channels is normally configured for input and automatically becomes an output when the CLOSE command is sent to that channel.
- RELAY is the module that contains 3 relays that serve to activate or disactivate certain parts of the system. Especially, one of these controls the DC/DC converter 18 that powers the radiometric instruments.

## Claims

1. An apparatus to detect the density profile of a layer of snow in a snow filled basin by means of a first station located in the snow filled basin in a significant position and comprising a source of radiations and at least three detectors of such radiations, a via-ether transmission means to transmit the data detected to a second remote station in which a processor handles the data received, characterized in that it is suited to detecting said profile by applying the algorithms of the static asymmetrical tomography to the signals detected by said first station, comprising:

   - a group of $\underline{n}$ detectors of the radiations from a radioactive source distributed along a pole (1) set in the snow filled basin, the detectors (3) being associated to a common multi-channel analyzer (5), and a common memory (6) and a common first MODEM (7),
   - a source of radiation (2) set at the base of said pole (1) and at a horizontal distance from said pole in order that each detector may "see" the source of radiation,
   - a phone equipment (8) connected to said first MODEM (7) to transmit to said second station in real time and according to a time schedule program input to said memory the data that said detectors (3) have read relatively to said radiations dampened by the snow juxtaposed between said source of radiation (2) and each detector (3), while said second station comprises:
   - a second MODEM (10) and an electronic processor (9) to perform the conversion of the measurements of radioactivity received through said phone equipment (8) into values of density of the layer of snow along the vertical by using the algorithms of static asymmetrical tomography.

2. An apparatus according to claim 1 characterized in that said phone equipment (8) is a cell phone.

3. An apparatus according to claims 1 and 2 characterized in that said source of radiations (2) is a natural radioactive source.

4. An apparatus according to claim 3 characterized in that said radioactive source (2) is a thorium salt.

5. An apparatus according to claim 1 characterized in that said detectors (3) are cesium iodide detectors.

EP 0 729 026 A1

# DIAGRAM OF A MEASURE FOR APPLYING THE TOMOGRAPHY TECHNIQUE

$Z_1$
$Z_2$
$Z_3$
$Z_4$
$Z_5$
$Z_6$
$Z_7$
$Z_8$

WATER CONTAINER

DETECTORS

$L_1$

$\alpha_1$

RADIOACTIVE SOURCE

POLE

## FIG.1

## DIAGRAM "D"

FIG.2

```
┌─────────────────┐
│   RADIOACTIVE   │
│     SOURCE      │
└─────────────────┘
         │
         ▼
┌─────────────────┐                    ┌─────────────────┐
│    DETECTORS    │                    │    PERSONAL     │
│                 │                    │    COMPUTER     │
└─────────────────┘                    └─────────────────┘
         │                                      │
┌─────────────────┐                    ┌─────────────────┐
│  MULTI-CHANNEL  │                    │    2°  MODEM    │
│    ANALYZER     │                    │                 │
└─────────────────┘                    └─────────────────┘
         │                                      │
┌─────────────────┐   ┌───────────┐   ┌─────────────────┐
│     BUFFER      │───│ 1° MODEM  │───│   CELL-PHONE    │
│     MEMORY      │   │           │   │                 │
└─────────────────┘   └───────────┘   └─────────────────┘
```

10

FIG.3

FIELD STATION

REMOTE STATION

European Patent Office

**EUROPEAN SEARCH REPORT**

Application Number

EP 96 10 2000

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-3 975 641 (R. MORRISON)<br>* column 2, line 44 - column 5, line 14; figures 1-4 *<br>--- | 1-5 | G01N23/08 |
| A | US-A-3 843 887 (R. MORRISON)<br>* column 3, line 64 - column 6, line 21; figures 1-3 *<br>----- | 1-5 | |

TECHNICAL FIELDS SEARCHED (Int.Cl.6)

G01N

The present search report has been drawn up for all claims

| Place of search | Date of completion of the search | Examiner |
|---|---|---|
| THE HAGUE | 13 June 1996 | Sgura, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)